Europäisches Patentamt

European Patent Office

Office européen des brevets

(11) Veröffentlichungsnummer: 0 264 630
A2

## (12) EUROPÄISCHE PATENTANMELDUNG

(21) Anmeldenummer: 87113636.2

(22) Anmeldetag: 17.09.87

(51) Int. Cl.⁴: B29B 13/02 , //B29K75:00

(30) Priorität: 23.10.86 DE 3636124

(43) Veröffentlichungstag der Anmeldung:
27.04.88 Patentblatt 88/17

(84) Benannte Vertragsstaaten:
AT BE CH DE ES FR GB GR IT LI LU NL SE

(71) Anmelder: Claassen, Henning J.
Industriegebiet Hafen
D-2120 Lüneburg(DE)

(72) Erfinder: Claassen, Henning J.
Industriegebiet Hafen
D-2120 Lüneburg(DE)

(74) Vertreter: Dipl.-Ing. Schwabe, Dr. Dr.
Sandmair, Dr. Marx
Stuntzstrasse 16
D-8000 München 80(DE)

(54) Vorrichtung zum Verflüssigen eines thermoplastischen Kunststoffes.

(57) Eine Vorrichtung zum Verflüssigen eines thermoplastischen Kunststoffes, insbensondere eines Klebstoffes auf der Basis von Polyurethan, weist einen beheizbaren, abgedichteten Vorratsbehälter mit einem oberen Teil für die Aufnahme eines nach unten offenen Transportbehälters für den thermoplastischen Kunststoff und mit einem unteren, als Puffer-Volumen dienenden Teil, eine Heizeinrichtung zur Erwärmung des in dem Transportbehälter befindlichen thermoplastischen Kunststoffes, einen unter dem Vorratsbehälter und damit unter dem Transportbehälter angeordneten, eine Auffangwanne für den verflüssigten thermoplastischen Kunststoff aufnehmenden Basisteil, einen Deckel am oberen Ende des Vorratsbehälters und eine Leitung zur Zuführung eines inerten Gases zum Innenraum des Vorratsbehälters auf. Die Leitung mündet in den Innenraum des Transportbehälters, wobei zweckmäßigerweise ein an der Innenseite des Deckels vorgesehener Dorn, dessen Spitze bei geschlossenem Deckel in die nach oben gewandte Fläche des Transportbehälters eindringt, zur Zuführung des Gases dient. Die Auslaßöffnung befindet sich in der Seitenwand der Spitze des Dorns.

Die Gaszuführung erfolgt getaktet, iridem ein in der Leitung vorgesehenes Magnetventil mittels einer Zeitschaltuhr geschlosen gehalten und nur für kurze Zeiträume geöffnet wird, wodurch sich eine merkliche Gaseinsparung ergibt.

Fig. 1

## Vorrichtung zum Verflüssigen eines thermoplastischen Kunststoffes

Die Erfindung betrifft eine Vorrichtung zum Verflüssigen eines thermoplastischen Kunststoffes, insbesondere eines Klebstoffes auf der Basis von Polyurethan, der im Oberbegriffe des Anspruchs 1 angegebenen Gattung.

Bei einer solchen Verflüssigungsvorrichtung, wie sie aus dem DE-GM 86 00 021 bekannte ist, weist der beheizbare, abgedichtete Vorratsbehälter einen oberen Teil für die Aufnahme eines nach unten offenen Transportbehälters für den thermoplastischen Kunststoff und einen unteren, als Puffer-Volumen dienenden Teil auf. Eine Heizeinrichtung erwärmt den in dem Transportbehälter befindlichen thermoplastichen Kunststoff, so daß dieser flüssig wird und in einen unter dem Vorratsbehälter und dem Transportbehälter angeordneten, eine Auffangwanne für den verflüssigten thermoplastischen Kunststoff aufnehmenden Basisteil fällt. Am oberen Ende des Vorratsbehälters ist ein schwenkbar ausgebildeter Deckel angebracht, der an seiner Innenseite mit einem Dorn versehen ist; die Spitze des Dorns dringt bei geschlossenem Deckel in die nach oben gewandte Fläche des Transportbehälters ein.

Ein inertes, meist als Schutzgas dienendes Gas wird dem Innenraum des Vorratsbehälters über eine Leitung zugeführt.

Bei Versuchen mit einer solchen Verflüssigungsvorrichtung haben sich jedoch Probleme herausgestellt, die im wesentlichen mit der Zuführung des Gases, bspw. Stickstoff, Kohlendioxid, aber auch bei weniger empfindlichen Kunststoffen Preßluft, zusammenhängen. Zunächst besteht die Gefahr, daß sich das Gas nur im Basisteil der Verflüssigungsvorrichtung sammelt und insbesondere den thermoplastischen Kunststoff in dem Transportbehälter nicht erreicht, so daß es dort zu unerwünschten Reaktionen kommen kann. Trotz dieser nicht optimalen Abschirmwirkung ist der Gasverbrauch sehr hoch, da dem Innenraum des Vorratsbehälters kontinuierlich Gas zugeführt werden muß.

Der Erfindung liegt deshalb die Aufgabe zugrunde, eine Vorrichtung zum Verflüssigen eines thermoplastischen Kunststoffes, insbesondere eines Klebstoffes auf der Basis von Polyurethan, der angegebenen Gattung zu schaffen, bei der die oben erwähnten Nachteile nicht auftreten. Insbesondere soll eine Verflüssigungsvorrichtung vorgeschlagen werden, die eine noch bessere Abschirmung von hochempfindlichen, bei Anwesenheit von Luft leicht reagierenden, hochviskosen Massen gegen unerwünschte Reaktionen ermöglicht.

Dies wird erfindungsgemäß durch die im kennzeichnenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen darauf, daß das Gas, gegebenenfalls auch Druckluft, gezielt in das Innere des nach unten offenen Transporthälters geleitet wird, so daß sich zum einen eine vollständige Umhüllung des thermoplastischen Kunststoffes in dem Transportbehälter durch das Gas ergibt und zum anderen das Ausfließen des verflüssigten thermoplastischen Kunststoffes aus dem Transportbehälter durch den Gasdruck unterstützt wird.

Als besonders geeignete "Leitung" für die Zuführung des Gases hat sich der Dorn herausgestellt, der sich an der Innenseite des schwenkbaren Deckels befindet und dessen Spitze bei geschlossenem Deckel in die nach oben gewandte Fläche des Transportbehälters eindringt. Versieht man die Spitze des Dorns mit einer Auslaßöffnung für das Gas, und schließt man den Dorn an die Gasleitung an, so wirkt der Gasdruck auf die Oberseite des thermoplastischen Kunststoffes im Transportbehälter, schirmt also bei nach unten ausfließendem thermoplastischem Kunststoff diese Oberseite ab und unterstützt außerdem die Bewegung des thermoplastischen Kunststoffes nach unten.

Um das Verstopfen der Auslaßöffnung für das Gas durch den Kontakt mit dem verflüssigten, thermoplastischen Kunststoff zu vermeiden, wird die Auslaßöffnung zweckmäßigerweise an der Seite des Dorns ausgebildet und mit einer zusätzlichen Biegung versehen.

Um den Gasverbrauch zu verringern, wird das Schutzgas, aber auch die eventuell zugeführte Druckluft, nur periodisch eingeleitet, d.h. ein in der Zuführleitung für das Gas vorgesehenes Ventil, insbesondere in Magnetventil, wird über eine programmierbare Zeitschaltuhr bspw. so gesteuert, daß das Magnetventil nach jeweils 20 Sekunden für jeweils eine Sekunde geöffnet wird; die dann austretende, im Vergleich mit kontinuierlichem Betrieb sehr geringe Gasmenge reicht zur Abschirmung empfindlicher thermoplastischer Kunststoffe aus; gleichzeitig ergibt sich im Vergleich mit dem bisher üblichen, kontinuierlichen Betrieb eine Einsparung an Gas von etwa 90 %. Mit üblichen Mitteln, nämlich mit der Verwendung von empfindlichen Einstelelementen für die Gaszufuhr, bspw. Feinst-Regulierung des Gasstromes, läßt sich diese Einsparung nicht erzielen.

Ein weiterer Vorteil dieser "getakteten" Gaszufuhr liegt darin, daß sich eine stoßweise Beaufschlagung des Systems mit dem Schutzgas ergibt, die eine günstige Auswirkung auf die Verflüssigung hat.

Zweckmäßigerweise wird in Strömungsrichtung des Gases gesehen hinter dem Magnetventil ein Druck-und/oder Strömungsregler mit entsprechendem Meßgerät vorgesehen, so daß sich auch extrem geringe Strömungsmengen einstellen lassen.

Die Erfindung wird im folgenden anhand von Ausführungsbeispielen unter Bezugnahme auf die beiliegenden, schematischen Zeichnungen näher erläutert. Es zeigen

Fig. 1 einen senkrechten Schnitt durch eine Vorrichtung zum Verflüssigen eines Klebstoffes auf der Basis von Polyurethan,

Fig. 2 im vergrößertem Maßstab eine Ansicht des Dorns mit der Auslaßöffnung für das Schutzgas, und

Fig. 3 eine Detailansicht der Gaszuführung.

Die allgemein durch das Bezugszeichen 10 angedeutete Verflüssigungsvorrichtung weist eine Grundplatte 11 auf, die einen Elektromotor 16, einen Schaltschrank 12, der die elektrischen Schaltelemente für die Regelung der Temperatur an den verschiedenen Heizelementen aufnimmt und mit Belüftungsschlitzen 14 versehen ist, und auf der gemäß der Darstellung in der Figur rechten Seite den eigentlichen Verflüssigungsteil trägt. Der Elektromotor 16 treibt über eine Kupplung, insbesondere eine Magnetkupplung, oder ein Getriebe, im allgemeinen ein Untersetzungsgetriebe, die durch das Bezugszeichen 18 angedeutet sind, eine Pumpe 20, im allgemeinen eine Zahnradpumpe, für die Förderung des erwärmten und damit verflüssigten Polyurethan-Klebstoffes.

Der eigentliche Verflüssigungsteil befindet sich in einer Wärmeschutzhaube 38, die auch die empfindlichen elektronischen Bauelemente des Schaltschrankes 12 abschirmt und an ihrem oberen Ende durch einen schwenkbar gelagerten Deckel 40 verschlossen ist. Zur Abdichtung des Spaltes zwischen dem Deckel 40 und dem unteren Bereich des Verflüssigungsteils dienen Dichtungen 40 bzw. 42. Außerdem ist eine schematische angedeutete Arretierung 41 vorgesehen, die den Deckel 40 in seiner aus der Figur ersichtlichen Arbeitslage hält.

Der eigentliche Verflüssigungsteil weist einen blockförmigen Unterbau 22 mit Heizungsbohrungen 24 auf, in denen sich bspw. mittels Schamott-Rohren isolierte, elektrische Widerstandsleiter befinden.

An seinem oberen Ende enthält der Block 22 eine als Auffangwanne augestaltete Aussparung 28, die über einen Kanal 29a mit der Pumpe 20 verbunden ist. Von der Pumpe 20 verläuft ein weiterer Teil 29b des Förderkanals zu dem Auslaß für den verflüssigten Klebstoff.

Auf dem Block 22 ist durch Klammern 36 der eigentliche Vorratsbehälter 30 lösbar befestigt, dessen Wände ebenfalls mit Heizungsbohrungen 32 versehen sind, in denen sich bspw. mittels Schamottrohren isolierte elektrische Widerstandsheizelemente befinden.

Zwischen der Oberkante der Wände des Blockes 22 im Bereich der Aussparung 28 und der Unterkante der Wände des Vorratsbehälters 30 sind Dichtungen 34 vorgesehen, insbesondere Isolierungen auf der Basis von Mineralfasern, zweckmäßigerweise Asbest.

Wie man aus der Figur erkennt, liegen die beiden oberen Dichtungen 40 und 42 and der Außenwand des nach oben offenen Vorratsbehälters 30 an.

Der Vorratsbehälter 30 weist zwei Teile auf, nämlich ein unteres Puffer-Volumen 48 und einen oberen Teil, der durch einen schmalen, von seiner Innenwand nach innen vorstehenden, umlaufenden Steg 31 von dem unteren Teil 48 getrennt ist. Auf diesem Steg liegt die Unterkante eines nach unten offenen Transportbehälters 46 für den Klebstoff auf, der in der Figur mit gestrichelten Linien angedeutet ist.

Die Innenkante des Deckels 40 ist einem nach unten vorstehenden spitzen Dorn 44 versehen, dessen Spitze in die nach oben gewandte Bodenfläche des Transportbehälters 46 eindringt.

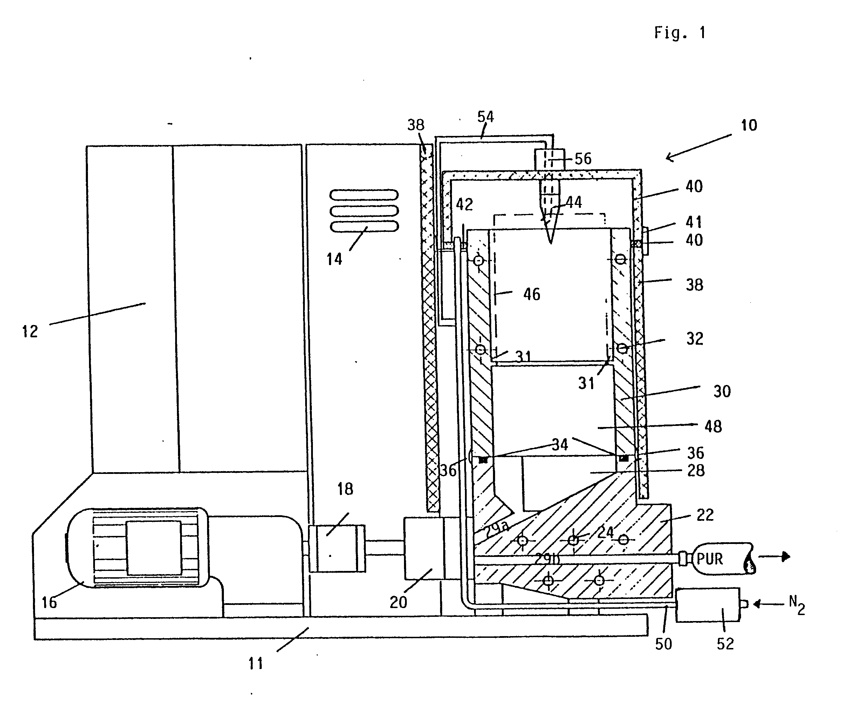

Eine Leitung 50 für ein inertes Gas, insbesondere Stickstoff oder Kohlendioxid, gegebenenfalls aber auch Druckluft, ist an eine in Figur 1 nur schematisch angedeutete Strömungsteuerung 52 angeschlossen und verläuft unter dem Block 22 hindurch, dann seitlich an dem Vorratsbehälter 30 vorbei nach oben und mündet in den Hohlraum, der zwischen dem oberen Ende des Vorratsbehälters 30 und dem Deckel 40 ausgebildet ist. Von der Leitung 50 zeigt eine Verlängerung 54 ab, die an den Dorn 44 angeschlossen ist. Durch den Dorn 44 erstreckt sich der aus Figur 1 ersichtliche Kanal 56, der seitlich an der Spitze des Dorns 44 austritt.

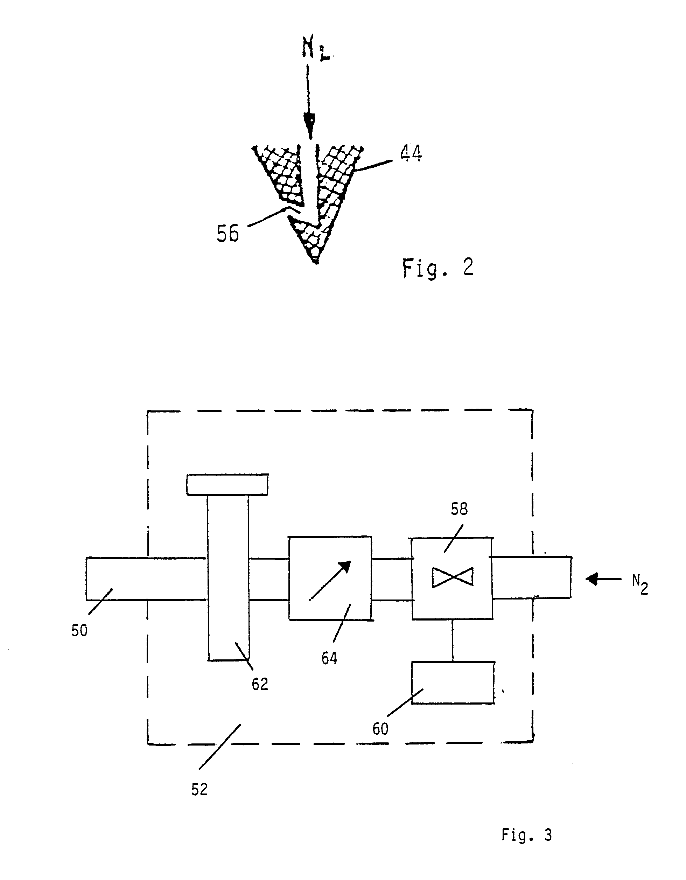

Wie man in Figur 2 erkennt, verläuft der Kanal 56 zunächst in Achsrichtung des Dorns 44 und knickt dann in einen Winkel von mehr als 90° zur Seite, also in Bezug auf die Strömungsrichtung sogar etwas gegen die Strömungsrichtung nach hinten ab, so daß das aus dem Kanal 56 im Dorn 44 austretende Gas in Richtung nach oben gegen den Boden des Transportbehälters 46 bläst.

Die Strömungssteuerung 52 (siehe Figur 3) weist ein Magnetventil 58 auf, das über eine Zeitschaltuhr 60 angesteuert ist. Dies Zeitschaltuhr 60 - schließt bspw. das Magnetventil 58 zwanzig Sekunden lang, unterbricht also während dieser Zeitspanne die Gaszufuhr, um anschließend eine Sekunde lang das Magnetventil 58 zu öffnen und damit den Gasdurchfluß zu ermöglichen.

In Strömungsrichtung gesehen hinter dem Magnetventil 58 ist ein Feinregulierventil 62 mit Feinst-Druckmanometer 64 vorgesehen, so daß auch extrem kleine Strömungsmengen und/oder Drücke eingestellt werden können.

Bei Betriebsbeginn wird der Deckel 40 geöffnet und ein Transportbehälter 46 für den Klebstoff auf der Basis von Polyurethan, der auf einer Seite geöffnet ist, mit der Öffnung nach unten so in den Vorratsbehälter 30 eingeführt, daß die Unterkante des Transportbehälters 46 auf dem umlaufenden Steg 31 aufliegt. Der Klebsoff auf der Basis von Polyurethan ist so zähflüssig, daß er noch nicht aus dem nach geöffenten Transportbehälter 46 ausließen kann.

Anschließend wird der Deckel 40 geschlossen, so daß die Spitze des Dorns 44 von oben in den Transportbehälter 46 eindringt. Gleichzeitig wird der Spalt zwischen dem Deckel 40 einerseits und der Wärmeschutzhaube 38 bzw. dem Vorratsbehälter 30 andererseits mittels der Dichtungen 40, 42 abgedichtet. Dann wird z.B. Stickstoff über die Strömungssteuerung 52 und die Leitung 50 zugeführt, so daß einerseits die Luft aus dem Vorratsbehälter 30 und der Auffangwanne 28 verdrängt wird und gleichzeitig Stickstoff über den Dorn 44 und den Kanal 56 von oben auf den Klebstoff in dem Transportbehälter 46 einwirkt, also eine zusätzliche, nach unten gerichtete Kraftkomponente erzeugt. Damit kann der Klebstoff nicht mehr in direkten Kontakt mit der Umgebungsluft kommen.

Nun werden die beiden unabhängig voneinander regelbaren Heizungen für den Block 22 einerseits und den Vorratsbehälter 30 andererseits eingeschaltet. Dadurch verflüssigt sich der Klebsoff im dem Transportbehälter 46, so daß er aus dem Transportbehälter 46 nach unten in das Puffer-Volumen 48 fließt. Dieses Puffer-Volumen 48 ist so ausgelegt, daß es für die Aufnahme einer Klebstoff-Menge ausreicht, die dem größten zu verarbeitenden Transportbehälter-Volumen entspricht. Der verflüssigte Klebstoff gelangt von dem Puffer-Volumen 48 über die als Auffangwanne dienende Aussparung 28 und den Kanal 29a zur Pumpe 20, die den verflüssigten Klebstoff über den Kanal 29b zum Auslaß fordert.

Dabei wird weiter Gas über den Kanal 56 im Dorn 44 zugeführt, um bis zum vollständigen Austritt des Klebstoffes aud dem Transportbehälter 46 seine Oberfläche abzuschirmen. Die Zufuhr des Stickstoffes erfolgt mittels der Strömungssteuerung 52 periodisch, und zwar mit einem Takt, der mittels der Zeitschaltuhr 60 eingestellt werden kann. Hierbei können bspw. die Eigenschaften des verwendeten Klebstoffes auf der Basis von Polyurethan, aber auch das Volumen und/oder der Druck des zugeführten Sticksoffes berücksichtigt werden.

Ist der Transportbehälter 46 vollständig entleert worden, so wird der Deckel 40 wieder geöffnet, der leere Transportbehälter 46 herausgenommen und ein neuer, voller Transportbehälter 46 eingesetzt. Gleichzeitig kann weitergearbeitet werden, da sich noch verflüssigter Klebstoff in dem Puffervolumen 48 befindet; nach oben zur Umgebungsluft hin ist dieser erwärmte und deshalb besonders reaktionsfähige Klebstoff durch die Stickstoffhaube abgeschirmt, so daß ohne jede Verschlechterung der Eigenschaften des erwärmten Klebstoffes in dem Puffer-Volumen 48 ein kontinuerlicher Betrieb möglich wird.

Da der beheizbare Vorratsbehälter 30 lösbar an dem Block 22 mit der Auffangwanne 28 befestigt wird, läß er sich problemlos unterschidelichen Verarbeitungs-Volumina und damit Transportbehälter-Volumina anpassen, indem bspw. der hohlzylindrische oder quaderförmige Transportbehälter 30 gegen eine andere Ausführungsform mit entsprechendem Volumen ausgetauscht wird.

Die Temperaturen in dem Block 22 einerseits und dem Vorratsbehälter 30 andererseits werden mittels nicht gezeigter üblicher Thermostat-Einrichtungen und entsprechenden Temperaturfühler auf einem einstellbaren, gewünschten konstanten Wert gehalten. Die entsprechenden elektronischen Bauteile befinden sich im Schaltschrank 12.

**Ansprüche**

1. Vorrichtung zum Verflüssigen eines thermoplastischen Kunststoffes, insbesondere eines Klebstoffes auf der Basis von Polyurethan,

a) mit einem beheizbaren, abgedichteten Vorratsbehälter, der eine oberen Teil für die Aufnahme eines nach unten offenen Transportbehälters für den thermoplastischen Kunststoff und einen unteren, als Puffer-Volumen dienenden Teil aufweist,

b) mit einer Heizeinrichtung zur Erwärmung des in dem Transportbehälter befindlichen thermoplastischen Kunststoffes,

c) mit einem unter dem Vorratsbehälter angeordneten, eine Auffangwanne für den verflüssigten thermoplastischen Kunststoff aufnehmenden Basisteil,

d) mit einem Deckel am oberen Ende des Vorratsbehälters, und

e) mit einer Leitung für die Zuführung eines inerten Gases zum Innenraum des Vorratsbehälters,

**dadurch gekennzeichnet, daß**

f) die Leitung (50, 54) eine in den Transportbehälter (46) führende Öffnung (56) aufweist.

2. Vorrichtung nach Anspruch 1, dadurch gekennzeichnet, daß die Öffnung (56) der Leitung (50, 54) sich im Bereich des Bodens des Transportbehälters (46) befindet.

3. Vorrichtung nach Anspurch 1 oder 2 mit einem schwenkbar gelagerten Deckel, an dessen Innenseite ein Dorn vorgesehen ist, dessen Spitze bei geschlossenem Deckel in die nach oben gewandte Fläche des Transportbehälters eindringt, dadurch gekennzeichnet, daß die Leitung (50, 54) durch den Dorn (44) verläuft, und daß sich die Öffnung (56) in der Spitze des Dorns (44) befindet.

4. Vorrichtung nach Anspruch 3, dadurch gekennzeichnet, daß der Dorn (44) einen in seiner Achsrichtung verlaufenden Kanal aufweist, der über einen Knick mit der in der Seitenwand der Spitze des Dorns (44) vorhandenen Öffnung (56) verbunden ist.

5. Vorrichtung nach Anspruch 3 oder 4, dadurch gekennzeichnet, daß die Öffnung (56) des Kanals zur Bodenwand des Transportbehälters (46) hingerichtet ist.

6. Vorrichtung zum Verflüssigen eines thermoplastischen Kunststoffes, insbesondere eines Klebstoffes auf der Basis von Polyurethan,

a) mit einem beheizbaren, abgedichteten Vorratsbehälter, der einen oberen Teil für die Aufnahme eines nach unten offenen Transportbehälters für den thermoplastischen Kunststoff und einen unteren, als Puffer-Volumen dienenden Teil aufweist.

b) mit einer Heizeinrichtung zur Erwärmung des in dem Transportbehälter befindlichen thermoplastischen Kunststoffes.

c) mit einem unter dem Vorratsbehälter angeordneten, eine Auffangwanne für den verflüssigten thermoplastischen Kunststoff aufnehmenden Basisteil,

d) mit einem Deckel am oberen Ende des Vorratsbehälters, und

e) mit einer Leitung für die Zuführung eines inerten Gases zum Innenraum des Vorratsbehälters, insbesondere nach einem der Ansprüche 1 bis 5, dadurch gekennzeichnet, daß an die Leitung (50, 54) eine Strömungssteuerung (52) zur periodischen Unterbrechung des Durchflusses angeschlossen ist.

7. Vorrichtung nach Anspruch 6, dadurch gekennzeichnet, daß die Strömungssteuerung (52) ein über eine Zeitschaltuhr (60) gesteuertes Ventil (58), insbesondere ein Magnetventil, aufweist.

8. Vorrichtung nach Anspruch 6 oder 7, dadurch gekennzeichnet, daß die Strömungssteuerung (52) eine Einrichtung (62, 64) zur Feinstregulierung der Strömungsmenge und/oder des Druckes des Gases aufweist.

9. Vorrichtung nach einem der Ansprüche 1 bis 8, dadurch gekennzeichnet, daß als Gas Stickstoff, Kohlendioxid oder Preßluft verwendet wird.

Fig. 1

0 264 630

N₂

44

56

Fig. 2

58

50

62

64

N₂

52

60

Fig. 3